# FASCICULE DE BREVET EUROPEEN

(11) **EP 2 727 319 B1**
(45) Date de publication et mention de la délivrance du brevet: **01.08.2018**
(21) Numéro de dépôt: 12734972.8
(22) Date de dépôt: 20.06.2012
(51) Int. Cl.: H04L 29/12, H04L 12/24, G06F 17/30

(54) **PROCÉDÉ D'AFFECTATION D'ADRESSES LOGIQUES AUX PORTS DE CONNEXION D'ÉQUIPEMENTS D'UNE GRAPPE DE SERVEURS, PROGRAMME D'ORDINATEUR ET GRAPPE DE SERVEURS CORRESPONDANTS**
VERFAHREN ZUR ZUORDNUNG VON LOGISCHEN ADRESSEN ZU DEN ANSCHLUSSPORTS VON VORRICHTUNGEN EINES SERVER-CLUSTERS SOWIE ENTSPRECHENDES COMPUTERPROGRAMM UND SERVER-CLUSTER
METHOD FOR ASSIGNING LOGICAL ADDRESSES TO THE CONNECTION PORTS OF DEVICES OF A SERVER CLUSTER, AND CORRESPONDING COMPUTER PROGRAM AND SERVER CLUSTER

(30) Priorité: 29.06.2011 FR 1155841
(43) Date de publication de la demande: 07.05.2014
(73) Titulaire: Bull SAS, 78340 Les Clayes-sous-Bois (FR)
(72) Inventeur: BOZGA, Liana, F-38240 Meylan (FR); PEYRARD, Johann, F-38330 Saint Ismier (FR); MISSIMILLY, Thierry, F-38410 Vaulnaveys le Haut (FR)
(74) Mandataire: Bonnet, Michel
(86) Numéro de dépôt international: PCT/FR2012/051389
(87) Numéro de publication internationale: WO 2013/001208

(56) Documents cités:
- WO-A1-2009/153498
- US-A1- 2007 294 307
- US-B1- 6 760 761

## Description

La présente invention concerne un procédé d'affectation d'adresses logiques à des ports de connexion d'équipements d'une grappe de serveurs. Elle concerne également un programme d'ordinateur pour la mise en oeuvre de ce procédé et une grappe de serveurs.

On connaît des grappes de serveurs comportant notamment plusieurs noeuds de calcul interconnectés entre eux. Les grappes de serveurs de ce type sont des installations informatiques comprenant généralement plusieurs ordinateurs en réseau, avec un stockage partagé, apparaissant de l'extérieur comme un calculateur à très forte puissance de calcul, dit calculateur à haute performance de traitement ou calculateur HPC (de l'Anglais « High Performance Computing »). Ces installations optimisées permettent la répartition de traitements complexes et/ou de calculs parallèles sur au moins une partie des noeuds de calcul.

Certaines grappes de serveurs, parmi les plus simples, peuvent comporter des équipements homogènes observant un même protocole d'identification, de sorte que ces éléments peuvent s'identifier automatiquement à la mise sous tension de l'installation, pour une bonne initialisation et administration de la grappe. Ce n'est malheureusement pas le cas de la plupart des grappes de serveurs complexes existant aujourd'hui, à capacités de calculs très élevées, pour lesquelles la génération d'une base de données reprenant l'ensemble des équipements hétérogènes et des paramètres de la grappe de serveurs est nécessaire. Cette base de données représente alors le référentiel unique de la configuration et de l'état de la grappe de serveurs.

Par équipements de la grappe de serveurs on entend les noeuds précités, mais également les commutateurs (généralement appelés « switch »), les baies informatiques de stockage de données, les gestionnaires de matériels, les alimentations électriques administrables, ou d'une façon plus générale tous les éléments raccordables entre eux à l'aide de ports de connexion qui ont besoin d'une adresse logique, notamment une adresse IP, pour fonctionner. Ainsi, par exemple, pour une grappe de serveurs de 5000 noeuds, de l'ordre de 15000 adresses logiques sont généralement nécessaires.

Une difficulté majeure consiste à renseigner cette base de données de toutes les informations nécessaires à l'administration de la grappe de serveurs, ces informations comportant notamment des adresses logiques à affecter aux ports de connexion des équipements de la grappe de serveurs. Les informations minimales nécessaires comportent en outre des données statiques de description logique et matérielle des équipements de la grappe de serveurs et de leurs interrelations telles que par exemple une description du matériel, une localisation géographique des serveurs et équipements de la grappe dans un centre de calcul, un état des outils logiciels installés, des données d'exploitation de la grappe, ou un état du matériel.

Pour renseigner la base de données, souvent définie sous forme de base de données relationnelle, des requêtes de manipulation de cette base de données sont généralement définies. Elles sont par défaut rédigées manuellement sous la forme de lignes de codes rassemblées en un ou plusieurs fichiers, pouvant atteindre plusieurs milliers de lignes pour les grappes de serveurs complexes. Prendre connaissance des documents techniques définissant une grappe de serveurs, incluant l'architecture et le câblage de la grappe, et rédiger ces requêtes de manipulation de la base de données peut prendre plusieurs mois. En outre, la rédaction n'est généralement pas structurée selon un ordre préétabli ce qui la rend encore plus difficile et longue. Enfin, la rédaction manuelle des requêtes de manipulation est source d'erreurs de saisie et nécessite de multiples vérifications de cohérence.

Le brevet français publié sous le numéro FR 2 931 970 B1 divulgue un procédé permettant de résoudre ce problème en automatisant la génération d'au moins un fichier de requêtes de manipulation de la base de données d'administration d'une grappe de serveurs pour son initialisation.

Ce procédé comporte entre autres les étapes suivantes :
- définition d'une politique d'adressage logique de ports de connexion d'équipements de la grappe,
- à partir d'une répartition logique des équipements de la grappe dans le réseau de transmission de données, d'une répartition géographique et d'une définition matérielle des équipements de la grappe, initialisation d'une base de données d'administration de la grappe de serveurs,
- en fonction en outre de la politique d'adressage logique, affectation d'adresses logiques auxdits ports de connexion d'équipements de la grappe de serveurs, et
- enregistrement des adresses logiques affectées dans la base de données d'administration de la grappe de serveurs.

Plus précisément, selon ce procédé, l'affectation des adresses logiques aux ports de connexion d'équipements de la grappe de serveurs et leur enregistrement se fait lors de l'initialisation de la base de données d'administration. Ainsi, cette initialisation se fait non seulement à partir de la répartition logique, de la répartition géographique et de la définition matérielle des équipements de la grappe, mais également en fonction de la politique d'adressage logique. Ce procédé tire en fait profit de la définition d'une politique d'adressage des ports de connexion des équipements de la grappe de serveurs pour structurer les étapes de génération d'un ensemble de paramètres de la grappe qui, après application de la politique d'adressage aux ports de connexion des équipements de la grappe de serveurs, permet d'envisager une génération facilitée d'un fichier de requêtes de manipulation de la base de données permettant son initialisation.

Mais cette solution ne convient pas pour des grappes de serveurs dont les performances peuvent aujourd'hui atteindre et dépasser le pétaflops (c'est-à-dire la capacité à réaliser 10¹⁵ opérations à virgule flottante par seconde, l'acronyme flops signifiant l'expression anglaise « floating point operations per second »). En effet, vu la taille de ces grappes, les réseaux logiques peuvent être excessivement complexes avec des mécanismes d'isolation et de sécurisation des réseaux, la définition de la politique d'adressage logique n'étant alors pas exprimable de façon simple.

En outre, dans un processus de conception de la grappe de serveurs par un fournisseur puis d'installation de cette grappe de serveurs sur un site de l'utilisateur, l'initialisation de la base de données d'administration intervient avant la livraison de la grappe de serveurs. Or, la politique d'adressage est généralement précisément et avantageusement définie par l'utilisateur alors que le procédé du brevet FR 2 931 970 B1 nécessite qu'elle soit déjà disponible avant l'étape d'initialisation de la base de données. Pour surmonter cette contradiction, la solution apportée impose une rigidité selon laquelle la politique d'adressage logique est définie en amont et sans souplesse pour l'utilisateur

Il peut ainsi être souhaité de prévoir un procédé d'affectation d'adresses logiques à des ports de connexion d'équipements d'une grappe de serveurs qui permette de s'affranchir d'au moins une partie des problèmes et contraintes précités. L'invention est définie dans les revendications indépendantes 1, 8 et 9.

L'invention a donc pour objet un tel procédé comportant les étapes suivantes :
- définition d'une politique d'adressage logique desdits ports de connexion d'équipements de la grappe,
- à partir d'une répartition logique des équipements de la grappe dans le réseau de transmission de données, d'une répartition géographique et d'une définition matérielle des équipements de la grappe, initialisation d'une base de données d'administration de la grappe de serveurs,
- en fonction en outre de la politique d'adressage logique, affectation d'adresses logiques auxdits ports de connexion d'équipements de la grappe de serveurs, et
- enregistrement des adresses logiques affectées dans la base de données d'administration de la grappe de serveurs,
caractérisé en ce qu'il comporte l'exécution d'un allocateur automatique d'adresses logiques sur la base de paramètres d'exécution comprenant :
- un fichier de description structurée de la politique d'adressage logique, et
- le contenu de la base de données d'administration préalablement initialisée.

Ainsi, l'allocation des adresses logiques est exécutée après l'initialisation préalable de la base de données d'administration de la grappe de serveurs, ce qui rend l'utilisateur final plus libre de définir, voire même de redéfinir, lui-même, et éventuellement en toute confidentialité, sa politique d'adressage logique. En outre, en définissant cette dernière dans un fichier de description structurée, il est possible d'envisager une configuration complexe en réseaux logiques pour une allocation d'adresses logiques opérationnelle sur des grappes de serveurs de puissance très élevée, de l'ordre du pétaflops et au-delà, qui impliquent environ 5000 noeuds ou plus. Enfin, la base de données d'administration étant initialisée avant l'allocation des adresses logiques, son contenu est exploitable pour une allocation automatique performante.

De façon optionnelle, le fichier de description structurée de la politique d'adressage logique comporte une arborescence de réseaux logiques et de plages d'adresses logiques dans ces réseaux.

En particulier, l'arborescence peut être définie selon le format XML.

De façon optionnelle également, l'arborescence comporte :
- à un premier niveau racine correspondant à la couche « physique » du modèle OSI d'Interconnexion de Systèmes Ouverts, une description de réseaux physiques de la grappe de serveurs,
- à un deuxième niveau correspondant aux couches « liaison de données » et « réseau » du modèle OSI d'Interconnexion de Systèmes Ouverts, une description des réseaux logiques de la grappe de serveurs,
- à un troisième niveau, une description du découpage de ces réseaux logiques en plages d'adresses logiques, et
- à un quatrième niveau, une description de classes des équipements de la grappe de serveurs et de leurs plages d'adresses logiques associées.

De façon optionnelle également, l'exécution de l'allocateur automatique d'adresses logiques comporte les deux étapes suivantes :
- configuration des réseaux logiques et génération d'un fichier de commande comportant des instructions d'allocation d'adresses logiques à des ports de connexion d'équipements de la grappe de serveurs, ces instructions étant exprimées en langage de gestion de base de données, et
- exécution du fichier de commande sur la base de données d'administration préalablement initialisée.

De façon optionnelle également, l'étape de configuration des réseaux logiques dans l'exécution de l'allocateur automatique d'adresses logiques comporte une vérification itérative sur tous les ports de connexion à allouer de la cohérence de la politique d'adressage définie dans le fichier de description structurée avec une structure physique de la grappe de serveurs.

De façon optionnelle également, les adresses logiques sont des adresses IP.

L'invention a également pour objet un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé d'affectation d'adresses logiques tel que défini précédemment, lorsque ledit programme est exécuté sur un ordinateur.

L'invention a également pour objet une grappe de serveurs comportant plusieurs noeuds interconnectés entre eux par au moins un réseau de transmission de données, dont au moins un serveur d'administration des noeuds de la grappe, par exemple associé à une baie de stockage de données d'administration, caractérisé en ce qu'elle comprend en outre une base de données d'administration initialisée et complétée par un procédé tel que défini précédemment, les données d'administration étant par exemple stockées dans la baie de stockage de données d'administration et le serveur d'administration comportant des moyens de gestion de cette base de données, parmi lesquels l'allocateur automatique d'adresses logiques.

De façon optionnelle, une grappe de serveurs selon l'invention peut comporter des noeuds de calcul, au moins un noeud remplissant une fonction de gestion du trafic des données exploitées par les noeuds de calcul et éventuellement au moins un noeud de gestion de données, et le réseau de transmission de données peut comporter au moins un réseau d'interconnexion des noeuds de calcul et au moins un réseau d'administration différent du réseau d'interconnexion des noeuds de calcul pour la connexion du serveur d'administration aux noeuds de calcul, de gestion du trafic des données exploitées par les noeuds de calcul et de gestion de données.

L'invention sera mieux comprise à l'aide de la description qui va suivre, donnée uniquement à titre d'exemple et faite en se référant aux dessins annexés dans lesquels :
- la figure 1 représente schématiquement la structure générale d'un exemple de grappe de serveurs de type calculateur HPC,
- la figure 2 représente schématiquement la configuration d'une base de données pour l'administration de la grappe de serveurs de la figure 1,
- la figure 3 illustre les étapes successives d'un procédé d'affectation d'adresses logiques à au moins une partie des noeuds de la grappe de serveurs de la figure 1.

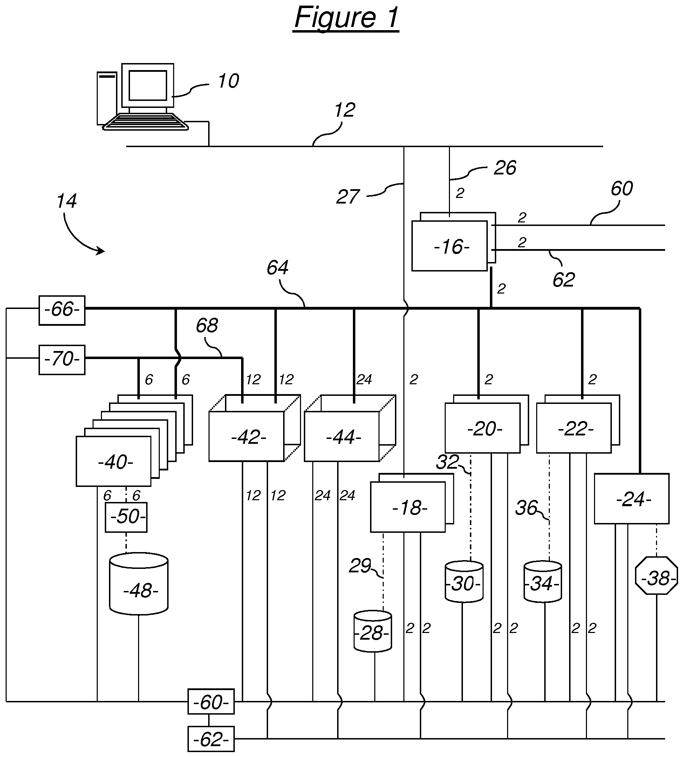

L'installation informatique représentée sur la figure 1 comporte un terminal de commande 10 relié à un réseau dorsal 12, généralement appelé réseau backbone (de l'anglais « backbone network »). C'est également à ce réseau dorsal 12 qu'est connectée une grappe de serveurs 14 apparaissant de l'extérieur, c'est à dire du point de vue du terminal de commande 10, comme une entité unique de calculateur HPC.

En fait, la grappe de serveurs 14 comporte plusieurs ordinateurs interconnectés entre eux au moyen de plusieurs réseaux, les uns et les autres étant hétérogènes.

L'ensemble des ordinateurs de la grappe de serveurs 14 constitue l'ensemble des noeuds de cette grappe. D'une façon plus générale, un noeud est un calculateur pouvant comporter une ou plusieurs unité(s) de calcul.

Dans la grappe de serveurs 14, on peut distinguer deux types de noeuds : les noeuds de calcul et les noeuds de service. Les noeuds de calcul sont ceux qui exécutent effectivement les différentes instructions de traitements commandées depuis le terminal de commande 10, sous la supervision des noeuds de services.

La plupart des noeuds de service sont dupliqués pour des raisons de sécurité. Autrement dit, chaque noeud de service est associé à un répliquât comportant les mêmes caractéristiques que lui et prêt à le remplacer immédiatement en cas de panne.

On notera par ailleurs que sur la figure 1, chaque fois qu'une multiplicité de liens existe entre deux entités (noeuds et/ou portions de réseaux), seul un lien sera représenté et accompagné d'un nombre indiquant le nombre de liens entre les deux entités, par souci de clarté de cette figure. En effet, si chaque lien devait être représenté, du fait de la complexité de la grappe de serveurs 14, il en résulterait une confusion qui nuirait à la compréhension de l'invention.

L'ensemble des noeuds de service de la grappe de serveurs 14 de la figure 1 comprend une interface de traitement 16, un serveur d'administration 18, un serveur 20 de gestion de métadonnées de la grappe, un serveur 22 de gestion des entrées/sorties et un serveur de gestion de données 24.

L'interface de traitement 16, plus communément qualifiée d'interface Login, remplit une fonction d'interface de calcul entre le réseau dorsal 12 et la grappe de serveurs 14. Elle est a priori de même nature que les noeuds de calcul mais est en outre dotée de compilateurs et d'outils spécifiques de calculs dont la présence sur cette interface est nécessaire pour traiter les instructions reçues du terminal de commande 10. L'interface de traitement 16 est dupliquée, comme indiqué précédemment pour des raisons de sécurité, et est donc reliée, avec son répliquât, au réseau dorsal 12 par l'intermédiaire de deux liens 26.

Le serveur d'administration 18 remplit une fonction d'administration générale de la grappe de serveurs 14. C'est notamment lui qui gère la distribution des instructions transmises par l'interface de traitement 16 aux différents noeuds de calcul en fonction de leur nature et disponibilité. Il est également dupliqué pour des raisons de sécurité. Le serveur d'administration 18 et son répliquât partagent une baie de stockage sur disque 28 à laquelle ils sont reliés par une pluralité de fibres optiques 29, pour un accès très rapide aux données stockées.

Pour permettre l'administration de la grappe de serveurs 14 par un utilisateur du terminal de commande 10, le serveur d'administration 18 est généralement lui aussi relié directement au réseau dorsal 12 avec son répliquât par l'intermédiaire de deux liens 27. Cela permet en outre à un utilisateur du terminal de commande 10 d'avoir plus d'emprise sur les stratégies et options de calcul choisies par la grappe de serveurs 14. Par ailleurs, dans certains modes de réalisation de grappes de serveurs de petite dimension n'ayant pas d'interface Login, ce double lien 27 est le seul lien entre la grappe de serveurs et le réseau dorsal.

Le serveur 20 de gestion de métadonnées, autrement appelé serveur MDS (de l'anglais « Meta Data Server ») et le serveur 22 de gestion des entrées/sorties, autrement appelé serveur OSS (de l'anglais « Object Storage Server ») remplissent une fonction de gestion du trafic des données exploitées par les noeuds de calcul de la grappe de serveurs 14. Ils gèrent pour cela un système de gestion de fichiers distribué, par exemple le système Lustre (marque déposée).

Ces deux serveurs sont également dupliqués et sont chacun reliés à une baie de stockage par fibres optiques. Le serveur MDS 20 et son répliquât partagent une baie de stockage sur disque 30 à laquelle ils sont reliés par une pluralité de fibres optiques 32. De même, le serveur OSS 22 et son répliquât partagent une baie de stockage sur disque 34 à laquelle ils sont reliés par une pluralité de fibres optiques 36.

Enfin le serveur de gestion de données 24 gère la protection des données de l'ensemble du calculateur HPC et est pour cela relié à une baie de stockage sur bandes 38. Ce serveur de gestion de données 24, contrairement aux autres noeuds de service de la grappe de serveurs 14, n'est pas dupliqué dans l'exemple illustré sur la figure 1.

L'ensemble des noeuds de calcul du calculateur HPC de la figure 1 est hétérogène et comporte plusieurs unités de noeuds de calcul telles que par exemple une première unité de calcul 40 comportant six serveurs, une deuxième unité de calcul 42 comportant douze serveurs et une troisième unité de calcul 44 comportant vingt-quatre serveurs.

Les six serveurs de la première unité de calcul 40 partagent une baie de stockage spécifique 48 à laquelle ils sont reliés via un commutateur 50. Cette baie de stockage 48 donne accès à des volumes de données qui sont par exemple organisés selon leur propre système de gestion de fichiers, qui peut être différent de celui géré par les serveurs MDS 20 et OSS 22.

Les différents noeuds de la grappe de serveurs 14 précités sont interconnectés entre eux à l'aide de plusieurs réseaux.

Un premier réseau 60, dit réseau d'administration, en général de type Ethernet, permet de relier le serveur d'administration 18 de la grappe de serveurs 14, via un port d'administration de ce serveur, aux autres noeuds de la grappe tels que l'interface de traitement 16, le serveur MDS 20, son répliquât et sa baie de stockage 30, le serveur OSS 22, son répliquât et sa baie de stockage 34, le serveur de gestion de données 24 et sa baie de stockage sur bandes 38, les première, deuxième et troisième unités de calcul 40, 42 et 44, la baie de stockage spécifique 48 de la première unité de calcul 40 et la plateforme d'administration 52.

De façon optionnelle, selon le matériel utilisé pour les noeuds de type serveur du calculateur, le réseau d'administration 60 peut être doublé d'un réseau de contrôle primaire 62 connecté au serveur d'administration 18 via un port de contrôle primaire de ce serveur différent du port d'administration. Ce réseau de contrôle primaire 62 est dédié à la mise sous tension, au démarrage, à l'arrêt et au traitement de certaines erreurs primaires prédéterminées, dites erreurs fatales et générant des fichiers Core, des serveurs qu'il administre. Dans l'exemple de la figure 1, le réseau de contrôle primaire 62 relie le serveur d'administration 18 à l'interface de traitement 16 et à son répliquât, au serveur MDS 20 et à son répliquât, au serveur OSS 22 et à son répliquât, au serveur de gestion de données 24, et aux deuxième et troisième unités de calcul 42 et 44.

Un deuxième réseau 64, dit réseau d'interconnexion des noeuds de calcul, relie entre eux, d'une part, les serveurs des première, deuxième et troisième unités de calcul 40, 42 et 44, et, d'autre part, l'interface de traitement 16, le serveur MDS 20, le serveur OSS 22 et le serveur de gestion de données 24. La commutation des données transitant entre les différents éléments interconnectés par ce réseau d'interconnexion 64 est assurée par un organe de commutation 66 de ce réseau qui est lui-même relié au réseau d'administration 60. Ce réseau d'interconnexion 64 a des caractéristiques de débit très élevé par rapport aux caractéristiques de débit du réseau d'administration 60. C'est en effet par ce réseau d'interconnexion 64 que transitent les données de calcul nécessaires à l'exécution des instructions de traitement transmises par le terminal de commande 10, via l'interface de traitement 16.

De façon optionnelle, le réseau d'interconnexion 64 peut être doublé d'un réseau supplémentaire d'interconnexion 68 relié à au moins une partie des éléments déjà reliés entre eux par le réseau d'interconnexion 64. Par exemple, dans la grappe de serveurs 14 de la figure 1, le réseau supplémentaire d'interconnexion 68 relie les serveurs des première et deuxième unités de calcul 40 et 42 pour doubler leur bande passante. De même, la commutation des données transitant entre les différents éléments interconnectés par ce réseau supplémentaire d'interconnexion 68 est assurée par un organe de commutation supplémentaire 70 de ce réseau qui est lui-même relié au réseau d'administration 60.

La structure de la grappe de serveurs 14, telle que décrite précédemment en référence à la figure 1, est appropriée pour la mise en oeuvre de l'invention, mais d'autres configurations possibles de grappes, notamment de type calculateur HPC, comprenant tout ou partie des éléments précités, voire comprenant d'autres éléments en cas de plus grande complexité, conviennent aussi. Dans une configuration simple, une grappe de serveurs comporte des noeuds de services comprenant au moins un serveur d'administration, des noeuds de calcul, un réseau d'administration reliant le noeud d'administration aux autres noeuds de la grappe et un réseau d'interconnexion des noeuds de calcul dont le débit plus élevé que celui du réseau d'administration permet d'atteindre des performances élevées de calcul. Plus généralement, une grappe de serveurs, comporte en outre des commutateurs, des baies informatiques, des gestionnaires de matériels, des alimentations, ou tous autres éléments raccordables entre eux à l'aide de ports de connexion qui ont besoin d'une adresse logique, notamment une adresse IP, pour fonctionner et qui forment l'ensemble de ses équipements.

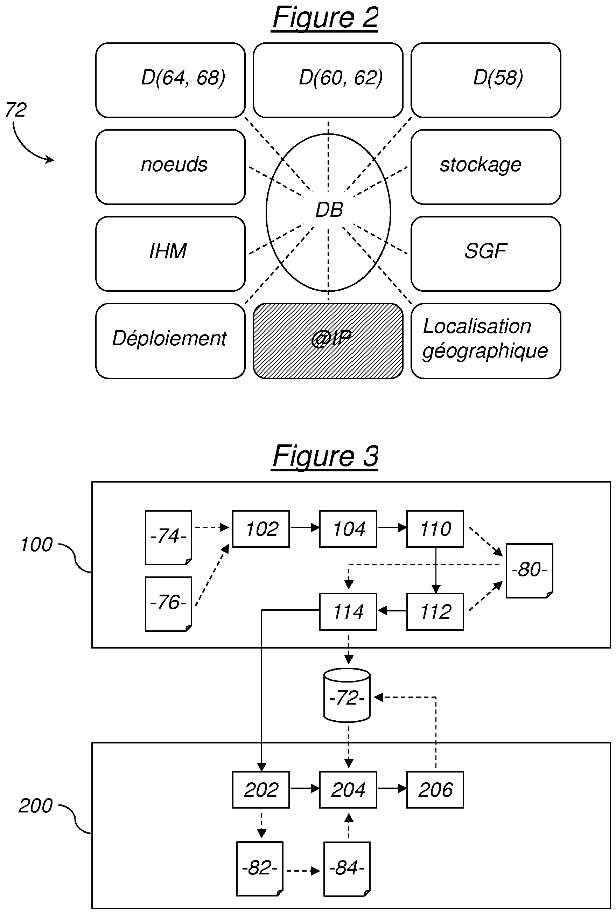

Une telle grappe de serveurs 14, composé d'éléments très hétérogènes, requiert une base de données 72 d'initialisation et d'administration, dont les outils d'administration sont par exemple hébergés par le serveur d'administration 18 et dont les données de description sont stockées dans la baie de stockage 28 associée au serveur d'administration 18. Les données, statiques ou dynamiques, de la base de données 72 sont régulièrement sauvegardées dans la baie de stockage sur bandes 38. Cette base de données 72 est représentée schématiquement sur la figure 2.

Elle comporte un coeur de base de données DB, incluant notamment ses outils d'administration, et des données de descriptions structurées (D(58), D(60,62), D(64,68), noeuds, IHM, Déploiement, @IP, Localisation géographique, SGF, stockage) visant à renseigner les informations nécessaires à l'initialisation et à l'administration de la grappe de serveurs 14.

Ces informations comportent tout d'abord des données D(58), D(60,62), D(64,68) concernant les différents réseaux de la grappe de serveurs 14 : le réseau d'administration 60, 62 et le réseau d'interconnexion 64, 68. Ces données concernent par exemple le type de réseau, ses capacités de transmission, un identifiant du fournisseur, etc.

Les informations comportent en outre des données « noeuds » sur les noeuds de type serveur de la grappe de serveurs 14 tels que ceux reliés au réseau de contrôle primaire 62 : la nature de chaque noeud (serveur de calcul, d'administration, etc.), ses caractéristiques techniques (modèle, état du matériel, capacité de calcul, mémoire RAM et état des outils logiciels installés), un identifiant du fournisseur, etc.

Les informations comportent également des données « stockage » de description sur l'infrastructure du stockage, sur la découpe logique de volume, sur les modèles de déploiement, etc.

Elles comportent aussi des données « IHM » concernant l'interface homme machine utilisée par la grappe de serveurs 14, des données « SGF » concernant le système de gestion de fichiers utilisé (par exemple le système Lustre), des données « Déploiement » concernant l'organisation du déploiement dans la grappe de serveurs 14, des données « @IP » concernant la distribution des adresses IP au sein de la grappe, ainsi que des données « Localisation géographique » concernant la localisation géographique des différents éléments.

Pour générer la base de données 72, c'est-à-dire pour renseigner les valeurs de ses données de description, on utilise avantageusement un procédé tel que celui dont les étapes sont illustrées sur la figure 3. Ce procédé opère en deux phases successives : une première phase 100 d'initialisation préalable de la base de données 72 lors de laquelle les données « @IP » ne sont pas renseignées (d'où leur représentation en grisé sur la figure 2), suivie d'une seconde phase 200 d'affectation d'adresses logiques à au moins une partie des ports de connexion d'équipements de la grappe de serveurs 14 lors de laquelle les données « @IP » sont renseignées. La première phase 100 est par exemple exécutée au moins partiellement par le concepteur et fournisseur de la grappe de serveurs 14 tandis que la seconde phase 200 peut être exécutée par l'utilisateur lorsque la grappe de serveurs est installée sur site.

La première phase 100 commence par une étape 102 de début d'initialisation de la base de données 72. Lors de cette première étape 102, des données statiques, définissant une répartition logique et géographique des équipements de la grappe dans ses différents réseaux, et définissant matériellement les équipements de la grappe, sont rassemblées et vérifiées par un opérateur.

De façon classique ces données sont disponibles sous la forme de fichiers numériques, par exemple des tableaux de données générés à l'aide d'un tableur. En effet, ces documents sont généralement issus d'une phase d'étude technique faisant suite à un appel d'offre et visant à définir l'architecture précise de la grappe de serveurs 14.

Un premier tableau 74, que l'on appellera tableau de représentation logique de la grappe de serveurs 14, comporte une liste des matériels et des interconnexions de port à port constituant la grappe accompagnés de toutes les informations permettant de les identifier de façon unique en tant que matériel et en tant qu'éléments de la grappe (notamment ce document attribue des numéros uniques pour chaque noeud de la grappe, ces numéros servant de suffixes aux identifiants).

Un second tableau 76, que l'on appellera tableau de représentation physique de la grappe de serveurs 14, donne une information complémentaire sur les équipements de la grappe de serveurs, en précisant leur localisation dans un centre de calcul destiné à recevoir la grappe de serveurs, par exemple à l'aide d'un système de coordonnées, en précisant notamment pour chaque câble la longueur nécessaire et son numéro de référence catalogue, en indiquant en outre certaines contraintes de poids ou de localisation, etc.

La vérification par l'opérateur consiste à s'assurer que les champs des tableaux 74 et 76 nécessaires à l'initialisation de la base de données 72 sont bien remplis.

Lors d'une étape 104 suivante, les données des tableaux 74 et 76 sont traduites automatiquement en requêtes de manipulation de la base de données 72 de la grappe de serveurs 14 qui sont sauvegardées dans un fichier de requêtes 80, lors d'une étape 110. Cette traduction de données de fichiers de type tableau en requêtes est classique et ne sera pas détaillée.

Lors d'une étape 112, un opérateur vérifie le résultat de la traduction de données en requêtes. A ce stade, une interaction est possible pour modifier le fichier de requêtes 80.

Enfin, au cours d'une dernière étape 114, ce fichier de requêtes 80 est exécuté par le serveur d'administration 18 sur site, lorsque la grappe de serveurs 14 est installée et en état de fonctionnement, de manière à initialiser la base de données 72. Néanmoins, bien qu'initialisée à partir des tableaux 74 et 76, la base de données 72 n'est pas encore apte à administrer la grappe de serveurs 14 puisque l'adressage logique des ports de connexion d'équipements de la grappe de serveurs 14 n'est pas encore réalisé. Les étapes 102 à 112, et même éventuellement l'étape 114 prévoyant un déploiement sur site de la grappe de serveurs 14, peuvent être réalisées par le concepteur/fournisseur de la grappe.

Lorsque la première phase 100 est terminée, la seconde phase 200 commence par une étape 202 de définition d'une politique d'adressage logique des ports de connexion d'équipements de la grappe de serveurs 14 et de génération d'un fichier 82 de description structurée de cette politique d'adressage logique.

En prenant l'exemple de la version 4 du protocole IP d'adressage logique, une adresse IP d'un port de connexion d'équipement de la grappe est définie par quatre octets dont les valeurs sont séparées par des points, en les ordonnant de l'octet ayant le poids le plus fort à celui de poids le plus faible. En supposant que cette adresse est de classe C, les trois premiers octets définissent la grappe de serveur en tant que réseau local et le dernier octet permet de distribuer théoriquement 255 adresses IP aux ports de connexion d'équipements de la grappe de serveurs. Si la grappe de serveurs comporte trop de ports de connexion par rapport aux adresses a priori disponibles en classe C, alors son adresse IP peut être choisie en classe B permettant ainsi une configuration en réseaux logiques plus complexe.

Une politique d'adressage logique consiste à prédéfinir des règles d'attribution des adresses disponibles. Elle comporte par exemple les règles suivantes :
- choix de la classe d'adressage en fonction du nombre d'adresses à distribuer dans la grappe de serveurs,
- réservation a priori de certaines adresses pour les commutateurs du réseau d'administration,
- réservation a priori de certaines adresses pour les commutateurs du réseau d'interconnexion des noeuds de calcul,
- réservation a priori de certaines adresses en tant qu'adresses virtuelles de noeuds ainsi identifiés par un alias lorsqu'ils sont dupliqués (c'est notamment le cas de l'interface de traitement 16, du serveur d'administration 18 et des noeuds de management 20 et 22),
- réservation a priori d'une zone d'adresses, pour les noeuds de calcul interconnectés en série,
- attribution d'une adresse de sous-réseau IP à chacun des trois réseaux de la grappe de serveurs 14,
- etc.

Les règles de distribution d'adresses logiques IP sont par ailleurs clairement définies dans le fichier 82 de description structurée de la politique d'adressage logique. Il s'agit par exemple d'un fichier conforme au langage XML (de l'anglais « eXtensible Markup Language) dans lequel une configuration logique de réseaux IP souhaitée par l'utilisateur de la grappe de serveurs 14 est définie sous la forme d'une arborescence. Un tel formalisme structuré de description d'une configuration logique de réseaux IP est notamment exploitable par un expert réseau.

Un exemple simple de tel fichier 82 est fourni en annexe 1. Il comporte un réseau logique principal nommé « interconnect » composé de deux réseaux IP : l'un nommé « interconnect », occupant un sous-réseau IP identifié par les adresses 10.5.0.0/16 et de type « primaire », c'est-à-dire associé directement à un réseau physique ; l'autre nommé « ib-backbone », occupant un sous-réseau IP identifié par les adresses 10.2.34.0/23 et de type « secondaire », c'est-à-dire associé indirectement à un ou plusieurs réseaux physiques.

Chaque réseau IP est ensuite, à un niveau hiérarchique supérieur de l'arborescence, découpé en plages d'adresses IP.

Par exemple, dans le fichier 82 de l'annexe 1, le réseau IP « interconnect » comporte :
- une première plage de première adresse IP 10.5.31.1, réservée aux noeuds de types « mngt » et « mws » du groupe « Service_1 »,
- une deuxième plage de première adresse 10.5.32.7, réservée aux noeuds de type « router » d'interface « ib0 » et aux noeuds de types « mds » et « io » du groupe « Service_1 » d'interface « ib0 »,
- une troisième plage de première adresse 10.5.33.7, réservée aux noeuds de type « router » d'interface « ib2 » et aux noeuds de types « mds » et « io » du groupe « Service_1 » d'interface « ib1 »,
- une quatrième plage de première adresse IP 10.5.34.1, réservée aux noeuds de type « compute » du groupe « Service_interco »,
- une cinquième plage de première adresse IP 10.5.36.1, réservée aux objets « hwmanager » de type « bmc », et
- une sixième plage de première adresse IP 10.5.60.1, réservée aux objets « switch » de type « eth ».

Par exemple également, dans le fichier 82 de l'annexe 1, le réseau IP « ib-backbone » comporte :
- une première plage de première adresse IP 10.2.34.1, réservée aux noeuds de type « compute » du groupe « Service_backbone », et
- une seconde plage de première adresse 10.2.35.231, réservée aux noeuds de type « gw_ip ».

D'une façon plus générale, le fichier 82 est composé d'un arbre de données hiérarchisées dont la structure peut être basée sur les principes du modèle OSI (de l'anglais « Open Systems Interconnection »). Ainsi par exemple, la racine de l'arbre de représentation de la configuration en réseaux logiques définit les réseaux physiques de la grappe de serveurs 14 répondant aux caractéristiques de la couche « physique » du modèle OSI. Le deuxième niveau de l'arbre définit les réseaux logiques et leurs caractéristiques correspondant aux caractéristiques des couches « liaison de données » et « réseau » du modèle OSI (notamment des caractéristiques permettant d'envisager un découpage en plages d'adresses IP et définissant des paramètres de sécurité). Le troisième niveau de l'arbre définit le découpage des réseaux logiques en plages d'adresses IP. Le quatrième niveau de l'arbre définit les classes des équipements de la grappe de serveurs 14. Ces classes sont définies grâce à un méta langage permettant de lier un équipement à ses caractéristiques physiques. Un équipement est défini par son modèle, son nom, ses caractéristiques et sa capacité à être affilié à une autre classe d'équipement. Les informations sur les classes sont déduites à partir des informations physiques de la base de données 72. Ce quatrième niveau de l'arbre attribue à une classe d'équipement, pouvant être trié en fonction de critères (type, localisation, fonction), une plage d'adresses IP définie dans le troisième niveau de l'arbre.

L'étape 202 de génération du fichier 82 est suivie d'une exécution d'un allocateur automatique d'adresses logiques sur la base :
- du fichier 82 de description structurée de la politique d'adressage logique, et
- du contenu de la base de données 72 préalablement initialisée lors de l'étape 114.

Cet allocateur automatique d'adresses logiques est par exemple un programme d'ordinateur exécutable recevant le fichier 82 et la base de données 72 comme paramètres d'exécution.

Un exemple de fichier source 84 de ce programme d'ordinateur est fourni en annexe 2, pour une première partie de l'allocateur dont la fonction est d'appliquer la structure logique de l'un ou plusieurs des réseaux IP définis dans le fichier 82 de description structurée sur chaque réseau physique défini dans la base de données 72 initialisée. A titre purement illustratif, le fichier source 84 comporte tout d'abord une définition des objets qui seront extraits des paramètres d'exécution : la liste des réseaux physiques, la liste des équipements et les groupes d'équipements définis par le client sont extraits de la base de données 72 initialisée ; les règles d'allocation d'adresses IP sont extraites du fichier 82 de description structurée. Il comporte ensuite des instructions de configuration des réseaux logiques une fois que les paramètres sont renseignés. Ces instructions sont suivies d'un parcours de tous les équipements de la grappe de serveurs 14 telle que décrite dans la base de données 72 pour lister quels sont les ports à allouer ou pas (étape itérative de suppression des ports alloués). Enfin, une fois que les ports à allouer sont identifiés, le fichier source 84 comporte une itération de vérification et d'allocation destinée à relever toute collision possible d'adresses IP ou tout dépassement de plages prédéfinies résultant d'une application de la configuration logique sur les réseaux physiques de la grappe de serveurs 14 et à allouer des adresses IP à chaque port de connexion à allouer. L'exécution du fichier source 84 au cours d'une étape 204 permet de créer un fichier de commande qui, lorsqu'il s'exécute dans une seconde partie de l'allocateur, au cours d'une dernière étape 206, lance des commandes en langage de gestion de base de données, par exemple en SQL, pour enrichir la base de données 72 des allocations d'adresses IP réalisées dans la première partie.

Il apparaît clairement qu'un procédé d'affectation d'adresses logiques tel que celui décrit précédemment permet à l'utilisateur d'une grappe de serveurs de définir ou compléter sa politique d'adressage logique avec une plus grande souplesse et une plus grande liberté, parce que les informations sur les réseaux logiques à appliquer sur les réseaux physiques sont généralement propres à chaque utilisateur en fonction de ses contraintes de structure et de sécurité. En outre, lors d'une évolution réseau de la grappe de serveurs, par exemple par l'ajout d'une carte réseau sur un noeud, ou d'une extension de la grappe de serveurs, l'allocateur automatique d'adresses logiques est capable de vérifier et signaler les incohérences qui pourraient apparaître et appliquer la configuration de réseau logique décidée par l'administrateur de la grappe.

Par ailleurs, il apparaîtra à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement décrit précédemment.

### ANNEXE 1

### Fichier 82 :

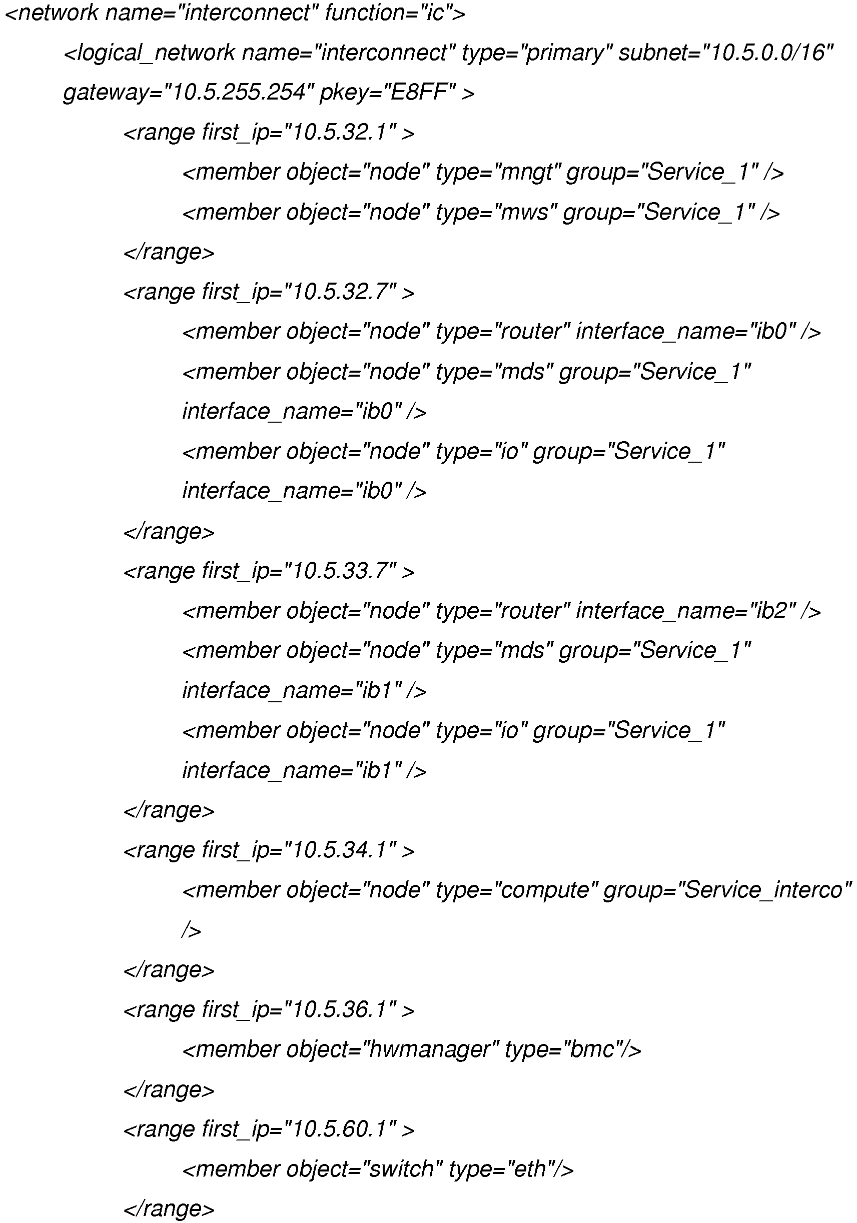

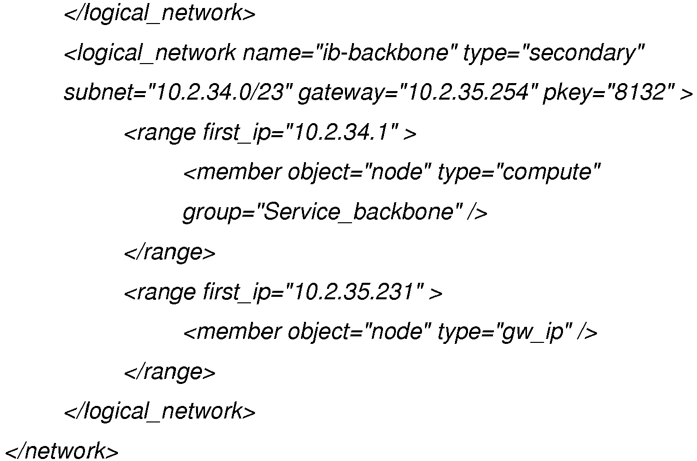

### ANNEXE 2

### Fichier 84 (première partie) :

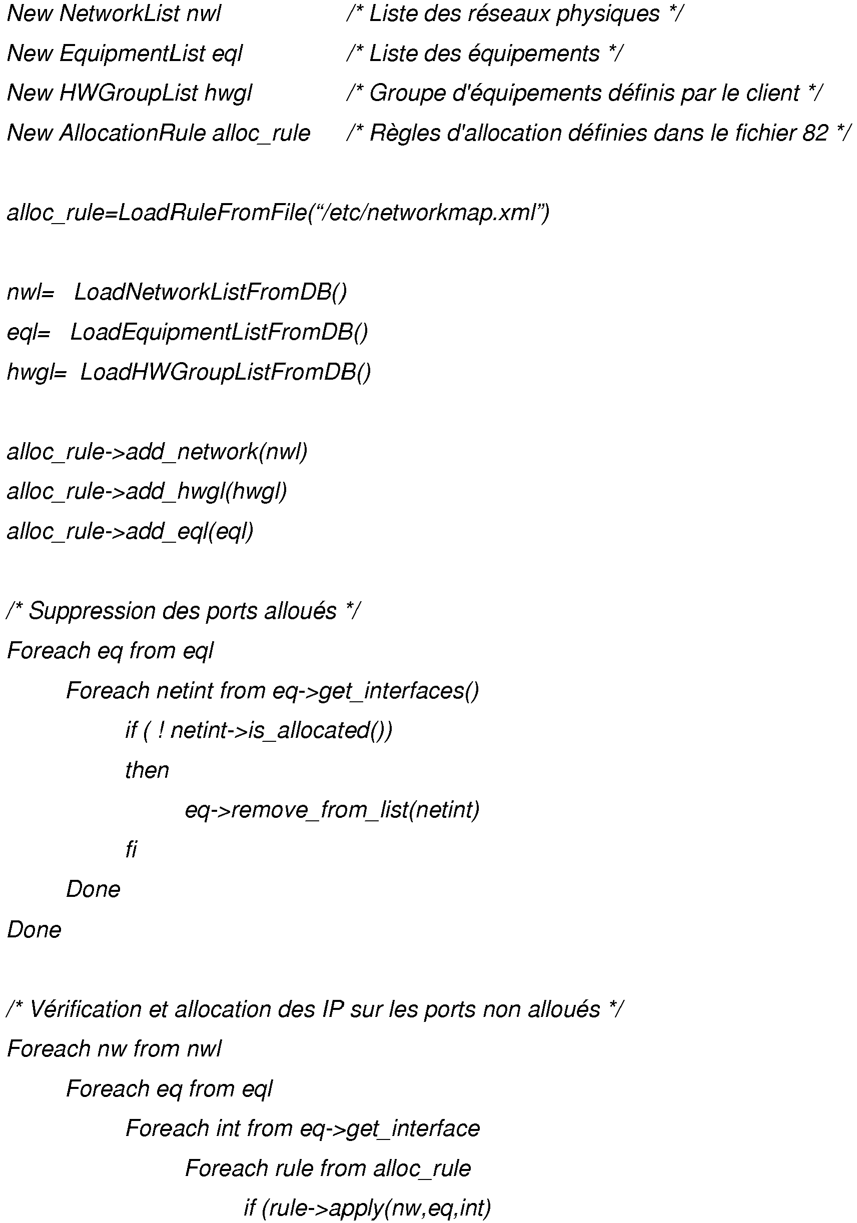

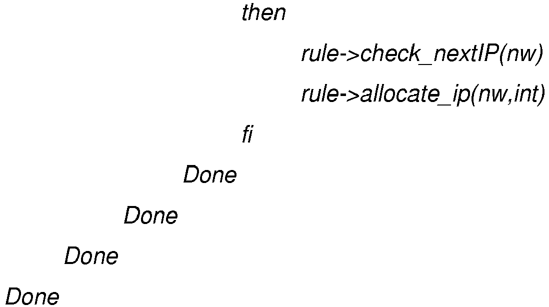

## Revendications

1. Procédé d'affectation d'adresses logiques à des ports de connexion d'équipements d'une grappe de serveurs (14), comportant les étapes suivantes :
- définition (202) d'une politique d'adressage logique desdits ports de connexion d'équipements de la grappe,
- à partir d'une répartition logique (74) des équipements dans la grappe de serveurs, d'une répartition géographique (76) et d'une définition matérielle (74, 76) des équipements de la grappe, initialisation (114) d'une base de données (72) d'administration de la grappe de serveurs par :
• traduction (104) de données relatives à cette répartition logique (74), cette répartition géographique (76) et cette définition matérielle (74, 76) en requêtes de manipulation de la base de données (72),
• sauvegarde (110,112) de ces requêtes, et
• exécution (114) de ces requêtes pour compléter la base de données (72),
- en fonction en outre de la politique d'adressage logique, affectation (204) d'adresses logiques auxdits ports de connexion d'équipements de la grappe de serveurs, et
- enregistrement (206) des adresses logiques affectées dans la base de données d'administration de la grappe de serveurs,
comportant l'exécution (204, 206) d'un allocateur automatique (84) d'adresses logiques sur la base de paramètres d'exécution comprenant un fichier (82) de description structurée de la politique d'adressage logique, dans lequel:
- l'initialisation (114) de la base de données d'administration (72), incluant l'exécution desdites requêtes, est réalisée sans affectation d'adresses logiques auxdits ports de connexion d'équipements de la grappe de serveurs,
- le fichier (82) de description structurée comporte une arborescence de réseaux logiques et de plages d'adresses logiques dans ces réseaux logiques, et
- les paramètres d'exécution de l'allocateur automatique (84) d'adresses logiques comportent en outre le contenu, obtenu par l'exécution desdites requêtes, de la base de données d'administration (72) préalablement initialisée de manière à lui appliquer l'arborescence du fichier (82) de description structurée pour affecter les adresses logiques auxdits ports de connexion d'équipement de la grappe de serveurs, et
- l'allocateur automatique (84) d'adresses logiques est exécuté après exécution de l'initialisation (114) de la base de données (72).

2. Procédé d'affectation d'adresses logiques selon la revendication 1, dans lequel :
- la base de données d'administration (72) préalablement initialisée comporte une liste de réseaux physiques, et
- l'application de l'arborescence du fichier (82) de description structurée au contenu de la base de données d'administration (72) préalablement initialisée consiste à appliquer la structure logique de l'un ou plusieurs des réseaux logiques définis dans le fichier (82) de description structurée sur chaque réseau physique défini dans la base de données d'administration (72) préalablement initialisée.

3. Procédé d'affectation d'adresses logiques selon la revendication 2, dans lequel l'arborescence est définie selon le format XML.

4. Procédé d'affectation d'adresses logiques selon la revendication 2 ou 3, dans lequel l'arborescence comporte :
- à un premier niveau racine correspondant à la couche « physique » du modèle OSI d'Interconnexion de Systèmes Ouverts, une description de réseaux physiques de la grappe de serveurs (14),
- à un deuxième niveau correspondant aux couches « liaison de données » et « réseau » du modèle OSI d'Interconnexion de Systèmes Ouverts, une description des réseaux logiques de la grappe de serveurs,
- à un troisième niveau, une description du découpage de ces réseaux logiques en plages d'adresses logiques, et
- à un quatrième niveau, une description de classes des équipements de la grappe de serveurs et de leurs plages d'adresses logiques associées.

5. Procédé d'affectation d'adresses logiques selon l'une quelconque des revendications 1 à 4, dans lequel l'exécution (204, 206) de l'allocateur automatique (84) d'adresses logiques comporte les deux étapes suivantes :
- configuration (204) des réseaux logiques et génération d'un fichier de commande comportant des instructions d'allocation d'adresses logiques à des ports de connexion d'équipements de la grappe de serveurs (14), ces instructions étant exprimées en langage de gestion de base de données, et
- exécution (206) du fichier de commande sur la base de données d'administration (72) préalablement initialisée.

6. Procédé d'affectation d'adresses logiques selon la revendication 5, dans lequel l'étape de configuration (204) des réseaux logiques dans l'exécution de l'allocateur automatique (84) d'adresses logiques comporte une vérification itérative sur tous les ports de connexion à allouer de la cohérence de la politique d'adressage définie dans le fichier de description structurée (82) avec une structure physique de la grappe de serveurs (14).

7. Procédé d'affectation d'adresses logiques selon l'une quelconque des revendications 1 à 6, dans lequel les adresses logiques sont des adresses IP.

8. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé d'affectation d'adresses logiques selon l'une quelconque des revendications 1 à 7, lorsque ledit programme est exécuté sur un ordinateur.

9. Grappe de serveurs (14) comportant plusieurs noeuds (16, 18, 20, 22, 24, 28, 30, 34, 38, 40, 42, 44, 46, 48, 52) interconnectés entre eux par au moins un réseau de transmission de données (58, 60, 62, 64, 68), dont au moins un serveur (18) d'administration des noeuds de la grappe associé à une baie (28) de stockage de données d'administration, la grappe de serveurs comprenant :
- des équipements à ports de connexion, parmi lesquels lesdits noeuds et tous les autres éléments raccordables entre eux à l'aide de ports de connexion qui ont besoin d'une adresse logique pour fonctionner,
- une base de données d'administration (72) initialisée par enregistrement, dans cette base de données d'administration (72), de données relatives à une répartition logique (74) des équipements dans la grappe de serveurs (14), à une répartition géographique (76) et à une définition matérielle (74, 76) des équipements de la grappe de serveurs (14), cette base de données d'administration (72) étant stocké dans la baie (28) de stockage de données d'administration,
- un fichier (82) de description structurée d'une politique d'adressage logique desdits ports de connexion d'équipements de la grappe de serveurs (14), et
- un allocateur automatique (84) d'adresses logiques sur la base de paramètres d'exécution comprenant ledit fichier (82) de description structurée de la politique d'adressage logique, cet allocateur automatique (84) étant hébergé par le serveur d'administration (18):
- un fichier de requêtes (80) sauvegardant les données relatives à la répartition logique (74) des équipements dans la grappe de serveurs (14) et relatives à la répartition géographique (76) et à la définition matérielle (74, 76) traduites automatiquement en requêtes de manipulation de la base de données (72) de la grappe de serveurs (74),
- un serveur d'administration (18) sur site, capable d'exécuter le fichier de requêtes, lorsque la grappe de serveurs (14) est installée et en état de fonctionnement, de manière à initialiser la base de données (72),
- la base de données d'administration initialisée (72), l'initialisation de la base de données d'administration incluant l'exécution desdites requêtes, ne comporte pas d'adresses logiques affectées auxdits ports de connexion d'équipements de la grappe de serveurs (14),
- le fichier (82) de description structurée comporte une arborescence de réseaux logiques et de plages d'adresses logiques dans ces réseaux logiques, et
- les paramètres d'exécution de l'allocateur automatique (84) d'adresses logiques comportent en outre le contenu de la base de données d'administration initialisée (72), de manière à lui appliquer l'arborescence du fichier (82) de description structurée pour affecter les adresses logiques auxdits ports de connexion d'équipement de la grappe de serveurs (14) et à les enregistrer dans la base de données d'administration initialisée (72) .

10. Grappe de serveurs (14) selon la revendication 9, comportant des noeuds de calcul (40, 42, 44), au moins un noeud (20, 22) remplissant une fonction de gestion du trafic des données exploitées par les noeuds de calcul et éventuellement au moins un noeud de gestion de données (24), et dans laquelle le réseau de transmission de données comporte au moins un réseau (64, 68) d'interconnexion des noeuds de calcul et au moins un réseau d'administration (60, 62) différent du réseau d'interconnexion des noeuds de calcul pour la connexion du serveur d'administration (18) aux noeuds de calcul (40, 42, 44), de gestion du trafic des données exploitées par les noeuds de calcul (20, 22) et de gestion de données (24).

## Patentansprüche

1. Verfahren zum Zuweisen von logischen Adressen zu Anschlussports von Geräten eines Server-Clusters (14), umfassend die folgenden Schritte:
- Definieren (202) einer Richtlinie zur logischen Adressierung der Anschlussports von Geräten des Clusters,
- Initialisieren (114), ausgehend von einer logischen Verteilung (74) der Geräte im Server-Cluster, von einer geografischen Verteilung (76) und von einer Hardware-Definition (74, 76) der Geräte des Clusters, einer Datenbank (72) zur Verwaltung des Server-Clusters durch:
• Übersetzen (104) der Daten, die sich auf diese logische Verteilung (74), diese geografische Verteilung (76) und diese Hardware-Definition (74, 76) beziehen, in Anfragen zur Bearbeitung der Datenbank (72),
• Sichern (110, 112) dieser Anfragen, und
• Ausführen (114) dieser Anfragen, um die Datenbank (72) zu vervollständigen,
- Zuweisen (204), weiter von der logischen Adressierungsrichtlinie abhängig, von logischen Adressen zu den Anschlussports von Geräten des Server-Clusters, und
- Speichern (206) der zugewiesenen logischen Adressen in der Verwaltungsdatenbank des Server-Clusters,
umfassend das Ausführen (204, 206) eines automatischen Zuteilers (84) von logischen Adressen auf der Basis von Ausführungsparametern, welche eine Datei (82) zur strukturierten Beschreibung der logischen Adressierungsrichtlinie umfassen,
wobei:
- das Initialisieren (114) der Verwaltungsdatenbank (72), das das Ausführen der Anfragen einschließt, ohne Zuweisen von logischen Adressen zu den Anschlussports von Geräten des Server-Clusters ausgeführt wird,
- die strukturierte Beschreibungsdatei (82) eine Baumstruktur von logischen Netzen und von logischen Adressbereichen in diesen logischen Netzen umfasst, und
- die Parameter zum Ausführen des automatischen Zuteilers (84) von logischen Adressen weiter den durch das Ausführen der Anfragen erhaltenen Inhalt der zuvor initialisierten Verwaltungsdatenbank (72) umfassen, um auf denselbe die Baumstruktur der strukturierten Beschreibungsdatei (82) anzuwenden, um die logischen Adressen zu den Anschlussports von Geräten des Server-Clusters zuzuweisen, und
- der automatische Zuteiler (84) von logischen Adressen nach Ausführen der Initialisierung (114) der Datenbank (72) ausgeführt wird.

2. Verfahren zum Zuweisen von logischen Adressen nach Anspruch 1, wobei:
- die zuvor initialisierte Verwaltungsdatenbank (72) eine Liste von physischen Netzen umfasst, und
- das Anwenden der Baumstruktur der strukturierten Beschreibungsdatei (82) auf den Inhalt der zuvor initialisierten Verwaltungsdatenbank (72) darin besteht, die logische Struktur von einem oder mehreren logischen Netzen, die in der strukturierten Beschreibungsdatei (82) definiert sind, auf jedes physische Netz anzuwenden, das in der zuvor initialisierten Verwaltungsdatenbank (72) definiert ist.

3. Verfahren zum Zuweisen von logischen Adressen nach Anspruch 2, wobei die Baumstruktur nach dem XML-Format definiert ist.

4. Verfahren zum Zuweisen von logischen Adressen nach Anspruch 2 oder 3, wobei die Baumstruktur umfasst:
- auf einer ersten Wurzelebene, die der "physischen" Schicht des OSI-Modells von Open Systems Interconnection entspricht, eine Beschreibung der physischen Netze des Server-Clusters (14),
- auf einer zweiten Ebene, die den "Datenverbindungs-" und "Netz-" Schichten des OSI-Modells von Open Systems Interconnection entspricht, eine Beschreibung der logischen Netze des Server-Clusters,
- auf einer dritten Ebene eine Beschreibung der Untergliederung dieser logischen Netze in logische Adressbereiche, und
- auf einer vierten Ebene eine Beschreibung der Klassen der Geräte des Server-Clusters und ihrer zugeordneten logischen Adressbereiche.

5. Verfahren zum Zuweisen von logischen Adressen nach einem der Ansprüche 1 bis 4, wobei das Ausführen (204, 206) des automatischen Zuteilers (84) von logischen Adressen die zwei folgenden Schritte umfasst:
- Konfigurieren (204) der logischen Netze und Erzeugen einer Befehlsdatei, die Anweisungen zum Zuteilen von logischen Adressen zu Anschlussports von Geräten des Server-Clusters (14) umfasst, wobei diese Anweisungen in Datenbank-Verwaltungssprache ausgedrückt sind, und
- Ausführen (206) der Befehlsdatei auf der zuvor initialisierten Verwaltungsdatenbank (72).

6. Verfahren zum Zuweisen von logischen Adressen nach Anspruch 5, wobei der Schritt des Konfigurierens (204) der logischen Netze beim Ausführen des automatischen Zuteilers (84) von logischen Adressen eine iterative Verifizierung, auf allen der zuzuteilenden Anschlussports, der Kohärenz der in der strukturierten Beschreibungsdatei (82) definierten Adressierungsrichtlinie mit einer physischen Struktur des Server-Clusters (14) umfasst.

7. Verfahren zum Zuweisen von logischen Adressen nach einem der Ansprüche 1 bis 6, wobei die logischen Adressen IP-Adressen sind.

8. Computerprogramm, das aus einem Kommunikationsnetz herunterladbar und/oder auf einem computerlesbaren Träger gespeichert und/oder über einen Prozessor ausführbar ist, **dadurch gekennzeichnet, dass** es Anweisungen für das Ausführen der Schritte eines Verfahrens zum Zuweisen von logischen Adressen nach einem der Ansprüche 1 bis 7 umfasst, wenn das Programm auf einem Computer ausgeführt wird.

9. Server-Cluster (14), der mehrere Knoten (16, 18, 20, 22, 24, 28, 30, 34, 38, 40, 42, 44, 46, 48, 52) umfasst, die untereinander über mindestens ein Datenübertragungsnetz (58, 60, 62, 64, 68) verbunden sind, darunter mindestens ein Server (18) zur Verwaltung der Knoten des Clusters, der einem Schacht (28) zum Speichern von Verwaltungsdaten zugeordnet ist, wobei der Server-Cluster umfasst:
- Geräte mit Anschlussports, unter ihnen die Knoten und alle die anderen mithilfe von Anschlussports untereinander verbindbaren Elemente, die eine logische Adresse brauchen, um zu funktionieren,
- eine Verwaltungsdatenbank (72), die durch Speichern von sich auf eine logische Verteilung (74) der Geräte im Server-Cluster (14), auf eine geografische Verteilung (76) und auf Hardware-Definition (74, 76) der Geräte des Server-Clusters (14) beziehende Daten in dieser Verwaltungsdatenbank (72) initialisiert wurde, wobei diese Verwaltungsdatenbank (72) im Verwaltungsdaten-Speicherschacht (28) gespeichert ist,
- eine strukturierte Beschreibungsdatei (82) einer logischen Adressierungspolitik der Anschlussports von Geräten des Server-Clusters (14), und
- einen automatischen Zuteiler (84) von logischen Adressen auf der Basis von Ausführungsparametern, welche die strukturierte Beschreibungsdatei (82) der logischen Adressierungsrichtlinie umfassen, wobei dieser automatische Zuteiler (84) vom Verwaltungsserver (18) gehostet wird,
- eine Anfragendatei (80), welche die automatisch in Anfragen zur Bearbeitung der Datenbank (72) des Server-Clusters (74) übersetzten, sich auf die logische Verteilung (74) der Geräte im Server-Cluster (14) beziehenden, und sich auf die geografische Verteilung (76) und auf die Hardware-Definition (74, 76) beziehenden Daten sichert,
- einen Verwaltungsserver (18) vor Ort, der in der Lage ist, die Anfragendatei auszuführen, wenn der Server-Cluster (14) installiert ist und sich in Betriebszustand befindet, um die Datenbank (72) zu initialisieren,
- die initialisierte Verwaltungsdatenbank (72), wobei das Initialisieren der Verwaltungsdatenbank, das das Ausführen der Anfragen einschließt, keine logischen Adressen umfasst, die den Anschlussports von Geräten des Server-Clusters (14) zugewiesen sind,
- die strukturierte Beschreibungsdatei (82) eine Baumstruktur von logischen Netzen und von logischen Adressbereichen in diesen logischen Netzen umfasst, und
- die Parameter zum Ausführen des automatischen Zuteilers (84) von logischen Adressen weiter den Inhalt der initialisierten Verwaltungsdatenbank (72) umfassen, um auf denselbe die Baumstruktur der strukturierten Beschreibungsdatei (82) anzuwenden, um die logischen Adressen zu den Anschlussports von Geräten des Server-Clusters (14) zuzuweisen, und um sie in der initialisierten Datenbank (72) zu speichern.

10. Server-Cluster (14) nach Anspruch 9, der Rechenknoten (40, 42, 44) umfasst, wobei mindestens ein Knoten (20, 22) eine Funktion zur Verwaltung des Verkehrs der von den Rechenknoten genutzten Daten und gegebenenfalls mindestens einen Knoten zur Verwaltung von Daten (24) umfasst, und wobei das Datenübertragungsnetz mindestens ein Netz (64, 68) zum Verbinden der Rechenknoten und mindestens ein sich von dem Netz zum Verbinden der Rechenknoten unterscheidendes Verwaltungsnetz (60, 62) für das Verbinden des Verwaltungsservers (18) mit den Rechen- (40, 42, 44), Datenverwaltungs- (24) und Knoten zum Verwalten des Verkehrs der von den Rechenknoten (20, 22) genutzten Daten umfasst.

## Claims

1. Method for assigning logical addresses to connection ports of devices of a server cluster (14), comprising the following steps:
- defining (202) a logical addressing policy of said device connection ports of the cluster,
- based on a logical distribution (74) of the devices in the server cluster, a geographic distribution (76) and a hardware definition (74, 76) of the devices of the cluster, initializing (114) a server cluster administration database (72) by:
• translating (104) data related to this logical distribution (74), this geographic distribution (76) and this hardware definition (74, 76) into requests for handling the database (72),
• saving (110, 112) these requests, and
• executing (114) these requests for completing the database (72),
- according further to the logical addressing policy, assigning (204) logical addresses to said device connection ports of the server cluster, and
- saving (206) the assigned logical addresses in the server cluster administration database,
comprising executing (204, 206) an automatic logical address allocator (84) based on execution parameters that include a structured description file (82) of the logical addressing policy,
wherein:
- initializing (114) the administration database (72), including executing these requests, is performed without assigning logical addresses to said device connection ports of the server cluster,
- the structured description file (82) includes a tree structure of logical networks and of logical address ranges in these logical networks, and
- the execution parameters for the automatic logical address allocator (84) further include the content, obtained by executing said requests, of the previously initialized administration database (72) so as to apply thereto the tree structure of the structured description file (82) to assign the logical addresses to said device connection ports of the server cluster, and
- the automatic logical address allocator (84) is executed after executing the initialization (114) of the database (72).

2. Method for assigning logical addresses according to claim 1, wherein:
- the previously initialized administration database (72) includes a list of physical networks, and
- applying the tree structure of the structured description file (82) to the content of the previously initialized administration database (72) consists of applying the logical structure of one or several of the logical networks defined in the structured description file (82) on each physical network defined in the administration database previously initialized (72).

3. Method for assigning logical addresses according to claim 2, wherein the tree structure is defined in XML format.

4. Method for assigning logical addresses according to claim 2 or 3, wherein the tree structure comprises:
- at a first root level corresponding to the "physical" layer of the OSI Open Systems Interconnection model, a description of physical networks of the server cluster (14),
- at a second level corresponding to the "data link" and "network" layers of the OSI Open Systems Interconnection model, a description of the logical networks of the server cluster,
- at a third level, a description of the division of these logical networks into logical address ranges, and
- at a fourth level, a class description of the devices of the server cluster and the associated logical address ranges thereof.

5. Method for assigning logical addresses according to any of claims 1 to 4, wherein the execution (204, 206) of the automatic logical address allocator (84) comprises the following two steps:
- configuration (204) of the logical networks and generation of a command file comprising instructions for allocating logical addresses to connection ports of devices of the server cluster (14), these instructions being expressed in database management language, and
- command file execution (206) based on the previously initialized administration database (72).

6. Method for assigning logical addresses according to claim 5, wherein the step for configuring (204) the logical networks in the execution of the automatic logical address allocator (84) comprises a loop check on all the connection ports to be allocated in respect of the consistency of the addressing policy defined in the structured description file (82) with a physical structure of the server cluster (14).

7. The method for assigning logical addresses according to any of claims 1 to 6, wherein the logical addresses are IP addresses.

8. Computer program downloadable from a communication network and/or saved on a computer-readable medium and/or executable by a processor, **characterised in that** it comprises instructions for executing steps of a method for assigning logical addresses according to any of claims 1 to 7, when said program is executed on a computer.

9. Server cluster (14) comprising a plurality of nodes (16, 18, 20, 22, 24, 28, 30, 34, 38, 40, 42, 44, 46, 48, 52) interconnected together by at least one data transmission network (58, 60, 62, 64, 68), including at least one cluster node administration server (18) associated with an administration data storage array (28), wherein the server cluster comprises:
- devices with connection ports, including said nodes and all other elements connectable together using connection ports that need a logical address to operate,
- an administration database (72) initialized by saving, in this administration database (72), data related to a logical distribution (74) of the devices in the server cluster (14), a geographic distribution (76) and a hardware definition (74, 76) of the devices of the server cluster (14), wherein said administration database (72) is stored in the administration data storage array (28),
- a structured description file (82) of a logical addressing policy of said device connection ports of the server cluster (14), and
- an automatic logical address allocator (84) based on execution parameters that include said structured description file (82) of the logical addressing policy, this automatic allocator (84) being hosted by the administration server (18),
- a request file (80) that saves data related to the logical distribution (74) of the devices in the server cluster (14) and related to the geographic distribution (76) and to the hardware definition (74, 76) automatically translated into requests for handling the database (72) of the server cluster (74),
- an administration server (18) on-site, able to execute the request file, when the server cluster (14) is installed and ready to operate, so as to initialize the database (72),
- the initialized administration database (72), wherein the initialization of the administration database includes executing said requests, does not include logical addresses assigned to said device connection ports of the server cluster (14),
- the structured description file (82) includes a tree structure of logical networks and of logical address ranges in these logical networks, and
- the execution parameters for the automatic logical address allocator (84) further include the content of the initialized administration database (72), so as to apply thereto the tree structure of the structured description file (82) to assign the logical addresses to said device connection ports of the server cluster and to save them in the initialized administration database (72).

10. Server cluster (14) according to claim 9, comprising compute nodes (40, 42, 44), at least one node (20, 22) carrying out a function for managing traffic in respect of the data processed by the compute nodes and optionally at least one data management node (24), and wherein the data transmission network comprises at least one compute node interconnection network (64, 68) and at least one administration network (60, 62) different to the compute node interconnection network for connecting the administration server (18) to the compute nodes (40, 42, 44), for managing the data traffic processed by the compute notes (20, 22) and managing data (24).
